# EUROPEAN PATENT APPLICATION

(11) **EP 4 560 718 A1**
(43) Date of publication of application: **28.05.2025**
(21) Application number: 24214156.2
(22) Date of filing: 20.11.2024
(51) Int. Cl.: H01M 4/04, H01M 4/62, H01M 4/131, H01M 4/02

(54) **CARBON BLACK DISPERSED COMPOSITION FOR BATTERIES, POSITIVE ELECTRODE-FORMING MIX PASTE, LITHIUM-ION SECONDARY BATTERY-FORMING POSITIVE ELECTRODE, AND LITHIUM-ION SECONDARY BATTERY**

(30) Priority: 22.11.2023 JP 2023197839
(71) Applicant: Shin-Etsu Chemical Co., Ltd., Chiyoda-ku, Tokyo 1000005 (JP)
(72) Inventor: KOMATSUKI, Keiichi, Joetsu-shi, 9428601 (JP); NIINOBE, Shingo, Chiyoda-ku, 1000005 (JP); KITAMURA, Akira, Joetsu-shi, 9428601 (JP)
(74) Representative: Mewburn Ellis LLP

(57) **Abstract**

In a carbon black dispersed composition comprising carbon black, methyl cellulose, and N-methyl-2-pyrrolidone, the methyl cellulose has a polydispersity index of up to 1.9 based on absolute molecular weight measurement by SEC-MALS and a 2 wt% aqueous solution viscosity of 3 to 30 mPa·s at 20°C. The composition having carbon black uniformly dispersed and maintaining the initial dispersion state, i.e., having storage stability is obtained without excessive labor and/or time.

## Description

### TECHNICAL FIELD

This invention relates to a carbon black dispersed composition for batteries, positive electrode-forming mix paste, lithium-ion secondary battery-forming positive electrode, and lithium-ion secondary battery.

### BACKGROUND

Lithium-ion secondary batteries are characterized by a high energy density. They enlarged the market under the impetus of wide-spreading mobile terminals such as cellular phones and lap-top personal computers. They marked an outstanding ramp of performance. Recently, the motivation for electrification of vehicles and efficient operation of power storage systems is increasing toward the establishment of sustainable society. Under the circumstance, the enlargement of the lithium-ion secondary battery market is expected.

The positive electrode of lithium-ion secondary batteries is mainly composed of an active material, conductive agent, binder, and current collector. Since the capacity of lithium-ion secondary batteries is mainly dictated by the amount of the active material, the amounts of conductive agent and ingredients other than the active material are preferably minimized in order to develop high-capacity batteries. The conductive agent which can impart high conductivity even when added in a smaller amount is tailored toward a larger specific surface area and higher structure. The conductive agent having a large surface area and high structure, however, is more agglomerative and thus difficult to achieve uniform dispersion. This can make the location of conductive paths within the electrode non-uniform to increase the internal resistance and also make the load distribution uneven to shorten the battery life.

Then, as the means for forming a uniformly dispersed electrode while preventing the conductive agent from agglomerating, it now becomes a common practice to form a positive electrode mix slurry by previously dispersing the conductive agent in a dispersing medium, typically organic solvent uniformly with the aid of a polymeric dispersant, to form a conductive agent dispersion, and mixing the conductive agent dispersion with a positive electrode active material and a binder.

The conductive agent dispersion must meet that the conductive agent is uniformly and effectively dispersed, and that the dispersion state of the conductive agent and the viscosity of the dispersion remain unchanged or stable throughout the storage period from the preparation of the dispersion to the preparation of an electrode mix slurry.

If the conductive agent agglomerates together due to poor dispersibility, the dispersion builds up its viscosity. Then the positive electrode mix slurry prepared from the dispersion is less effective to coat, failing to form a flat coating of the mix. As a result, the distribution of conductive paths within the electrode becomes non-uniform, leading to deterioration of the electrode performance.

The dispersion storage stability reflects a change with time of the dispersion state of the conductive agent. Thus, a great change of dispersion state during storage exaggerates the variation of quality of positive electrodes being manufactured.

Most often, carbon black is used as the conductive agent. As the means for improving the dispersibility and storage stability of a dispersion using carbon black as the conductive agent, for example, a dispersion having added an acidic compound such as carboxylic acid as an extra additive is known from Patent Document 1: JP-A 2016-046188.

As the means for improving a conductive agent dispersion without using an extra additive, a dispersion whose dispersibility and storage stability are improved by managing its viscosity within a specific range is known from Patent Document 2: JP-A 2020-021632.

### Citation List

| | |
|---|---|
| Patent Document 1: | JP-A 2016-046188 |
| Patent Document 2: | JP-A 2020-021632 |

### DISCLOSURE OF INVENTION

Although Patent Document 1 describes nowhere the mechanism that an acidic compound acts on the dispersibility of carbon black, it is estimated that the dispersion of carbon black is enhanced by controlling the pH environment on the surface of carbon black particles. However, since there is a concern that an acidic compound acts as a cause of chemically modifying the electrode mix, it is undesirable to add the acidic compound to the carbon black dispersion.

In the method of Patent Document 2, the treatment of dispersion must be continued until the dispersion reaches the desired viscosity properties. Greater amounts of labor and time are often needed, making it difficult to meet the current demands in the battery market for production cost saving and production quantity increase.

An object of the invention is to provide a carbon black dispersed composition for batteries comprising N-methyl-2-pyrrolidone as a dispersing medium, capable of enhancing the dispersibility of carbon black, maintaining the dispersed state immediately after dispersion step, and achieving storage stability without a need for extra labor and time; a positive electrode-forming mix paste, a lithium-ion secondary battery-forming positive electrode, and a lithium-ion secondary battery using the carbon black dispersed composition.

The inventors attempted to select among numerous polymers a dispersant capable of improving the dispersibility of carbon black in N-methyl-2-pyrrolidone (NMP) and improving the storage stability of the dispersion. Paying attention to cellulose derivatives in the course of research work, the inventors repeated trial-and-error experiments on the application of various cellulose derivatives.

Quite unexpectedly, when a methyl cellulose having a polydispersity index of up to 1.9 based on absolute molecular weight measurement by size exclusion chromatography (SEC) coupled with multi-angle light scattering (MALS) and a 2 wt% aqueous solution viscosity of 3 to 30 mPa·s at 20°C is selected among numerous cellulose derivatives as the dispersant, the dispersibility and storage stability of carbon black are significantly improved. The invention is predicated on this discovery.

In one aspect, the invention provides a carbon black dispersed composition for batteries comprising carbon black, methyl cellulose, and N-methyl-2-pyrrolidone, wherein the methyl cellulose has a polydispersity index of up to 1.9 based on absolute molecular weight measurement by size exclusion chromatography (SEC) coupled with multi-angle light scattering (MALS) and a 2 wt% aqueous solution viscosity of 3 to 30 mPa·s at 20°C.

In one preferred embodiment, the content of carbon black is 5 to 20% by weight of the composition.

In one preferred embodiment, the carbon black has a BET specific surface area of 30 to 1,500 m²/g.

In one preferred embodiment, 1 to 20 parts by weight of methyl cellulose is present per 100 parts by weight of carbon black.

In another aspect, the invention provides a positive electrode-forming mix paste comprising the carbon black dispersed composition defined above, a positive electrode active material, and a binder.

In a further aspect, the invention provides a lithium-ion secondary battery-forming positive electrode comprising a current collector and a positive electrode mix layer which is formed on the collector by coating and drying the mix paste thereto.

In a still further aspect, the invention provides a lithium-ion secondary battery comprising the positive electrode defined above, a negative electrode, an electrolyte, and a separator.

### ADVANTAGEOUS EFFECTS

The carbon black dispersed composition for batteries according to the invention is capable of improving the dispersibility and storage stability of carbon black. On use of this carbon black dispersed composition, reductions of rejection rate and production cost during the manufacture of lithium-ion secondary batteries are expectable.

### FURTHER EXPLANATIONS; OPTIONS AND PREFERENCES

In the disclosure, N-methyl-2-pyrrolidone is often abbreviated as NMP.

### [Carbon black dispersed composition]

The carbon black dispersed composition for batteries is described below in detail.

The invention provides a carbon black dispersed composition for batteries comprising carbon black, methyl cellulose, and N-methyl-2-pyrrolidone (NMP). The methyl cellulose has a polydispersity index of up to 1.9 based on absolute molecular weight measurement by size exclusion chromatography (SEC) coupled with multi-angle light scattering (MALS) and a 2 wt% aqueous solution viscosity of 3 to 30 mPa·s at 20°C.

### <Carbon black>

Carbon black is added as a conductive agent for increasing the electroconductivity of an electrode (specifically a positive electrode in the case of a lithium-ion secondary battery) which is made of the carbon black dispersed composition. Exemplary of the carbon black are acetylene black, furnace black, thermal black, and Ketjenblack. By using acetylene black, improving conductivity and dispersibility may be ensured.

Carbon black should preferably have a BET specific surface area (i.e., specific surface area as measured by the BET method) of 30 to 1,500 m²/g, more preferably 40 to 600 m²/g, even more preferably 50 to 300 m²/g. By using said BET specific surface area, improving dispersibility thereof in NMP and conductivity to be imparted to the positive electrode may be ensured.

The content of carbon black is preferably 5 to 20% by weight, more preferably 9 to 19% by weight of the composition. By using said carbon black content, improving fluidity and handling of a dispersion composition may be ensured. Differently stated, the content of carbon black is preferably 5 to 20 parts by weight, more preferably 9 to 19 parts by weight per 100 parts by weight of the overall carbon black dispersed composition (preferably the total of carbon black, methyl cellulose and NMP).

Along with carbon black, another carbon material such as carbon nanotubes, graphene or graphite may be blended as the conductive agent. When the other carbon material is additionally blended, the amount thereof is preferably 5 to 20 parts by weight, more preferably 9 to 19 parts by weight per 100 parts by weight of the overall carbon black dispersed composition (preferably the total of carbon black, methyl cellulose and NMP).

### <Methyl cellulose>

Methyl cellulose is used as a dispersant for enhancing the dispersibility of carbon black.

Methyl cellulose has a degree of substitution (DS) of methoxy groups which is preferably in the range of 1.60 to 2.10, more preferably 1.70 to 2.00. With respect to the DS of methoxy, measurement may be made by the analysis of DS of methyl cellulose prescribed in the Japanese Pharmacopoeia, 18th Edition (the same holds true, hereinafter).

A 2 wt% aqueous solution of methyl cellulose should have a viscosity at 20°C of 3.0 to 30.0 mPa s, preferably 3.5 to 20.0 mPa s. By using said viscosity, improving dispersibility and storage stability of carbon black may be ensured. The 2 wt% aqueous solution viscosity at 20°C is a measurement of the viscosity of a 2 wt% aqueous solution of methyl cellulose at 20°C using a Ubbelohde viscometer according to JIS K2283-1993 (the same holds true, hereinafter).

The methyl cellulose should have a polydispersity index of up to 1.9, preferably 1.0 to 1.80, more preferably 1.40 to 1.80 based on absolute molecular weight measurement by size exclusion chromatography (SEC) coupled with multi-angle light scattering (MALS). The polydispersity index is defined as a ratio (Mw/Mn) of weight average molecular weight (Mw) to number average molecular weight (Mn) and represents the distribution of molecular weight. A smaller value of Mw/Mn indicates a narrower molecular weight distribution whereas a larger value of Mw/Mn indicates a broader molecular weight distribution. The Mw and Mn can be measured by the absolute molecular weight measurement by size exclusion chromatography (SEC) coupled with multi-angle light scattering (MALS) (see Tablets & Capsules, 14-20, July 2007). Herein, the "polydispersity index" refers to a Mw/Mn based on the absolute molecular weight measurement by SEC coupled with MALS.

The amount of methyl cellulose added is preferably 1 to 20 parts by weight, more preferably 3 to 15 parts by weight per 100 parts by weight of carbon black in the carbon black dispersed composition. By using said methyl cellulose amount, improving dispersibility of carbon black and electric properties of an electrode made of the carbon black dispersed composition may be ensured. The content of methyl cellulose is preferably 0.05 to 4% by weight, more preferably 0.15 to 3% by weight of the carbon black dispersed composition. By using said methyl cellulose content, improving dispersibility of carbon black and electric properties of an electrode made of the carbon black dispersed composition may be ensured. Differently stated, the content of methyl cellulose is preferably 0.05 to 4 parts by weight, more preferably 0.15 to 3 parts by weight per 100 parts by weight of the overall carbon black dispersed composition (preferably the total of carbon black, methyl cellulose and NMP).

The method of preparing methyl cellulose is not particularly limited as long as the methyl cellulose has a polydispersity index of up to 1.9 and a 2 wt% aqueous solution viscosity at 20°C of 3 to 30 mPa s. For example, methyl cellulose may be prepared by a method comprising at least step (S11) of contacting pulp with an alkali metal hydroxide solution to form an alkali cellulose, step (S12) of feeding oxygen to the alkali cellulose to effect depolymerization treatment, step (S13) of conducting etherifying reaction of the alkali cellulose as depolymerized with a methylating agent to form a reaction product, step (S14) of washing the reaction product to obtain washed methyl cellulose, and step (S15) of drying and grinding the washed methyl cellulose (referred to as "methyl cellulose preparing method 1," hereinafter). Alternatively, methyl cellulose may be prepared by a method comprising at least step (S21) of contacting pulp with an alkali metal hydroxide solution to form an alkali cellulose, step (S22) of conducting etherifying reaction of the alkali cellulose with a methylating agent to form a reaction product (i.e., conducting etherifying reaction by adding a methylating agent without the depolymerization treatment of feeding oxygen to the alkali cellulose as conducted in methyl cellulose preparing method 1), step (S23) of washing the reaction product to obtain washed methyl cellulose, step (S24) of drying and grinding the washed methyl cellulose to form methyl cellulose prior to depolymerization, step (S25) of subjecting the methyl cellulose (prior to depolymerization) to depolymerization treatment with an acid to form depolymerized methyl cellulose, and step (S26) of subjecting the depolymerized methyl cellulose to dialysis treatment (referred to as "methyl cellulose preparing method 2," hereinafter). The above-exemplified methods are described below in detail.

### [Methyl cellulose preparing method 1]

Reference is first made to methyl cellulose preparing method 1.

Step (S11) is to contact pulp with an alkali metal hydroxide solution to form an alkali cellulose.

Examples of the pulp include cellulose pulps such as wood pulp and lint pulp.

Solids in pulp contain cellulose as the main component and minor amounts of organics such as low degree-of-polymerization cellulose, hemicellulose, lignin, and resins, and inorganics such as Si and Fe ingredients. Since the content of low degree-of-polymerization cellulose in commercially available pulp which is obtained by digesting and bleaching wood is very low, the cellulose content of solids in pulp is regarded substantially equal to the content of α-cellulose.

The solids in pulp can be computed from a dry matter content as determined by the test method of determining dry matter content of pulp according to JIS P8203: 1998. The dry matter content in % by weight is determined by drying a sample at 105±2°C until its weight becomes constant, and calculating a ratio of the dry weight to the initial weight.

Pulp has an intrinsic viscosity, which is an index for degree of polymerization, of preferably less than 800 ml/g, more preferably less than 600 ml/g. By using said intrinsic viscosity, reducing the polydispersity index (Mw/Mn) of methyl cellulose may be ensured. The lower limit of intrinsic viscosity is preferably 200 ml/g. Notably, the intrinsic viscosity may be measured by the viscosity measuring method of JIS P8215.

Examples of the alkali metal hydroxide solution include aqueous solutions of alkali metal hydroxides such as sodium hydroxide and potassium hydroxide.

The alkali metal hydroxide solution preferably has an alkali metal hydroxide concentration of 10 to 60% by weight. By using said alkali metal hydroxide concentration, economy and ease of handling may be ensured.

The amount of the alkali metal hydroxide solution used may be set as appropriate in accordance with the DS of methoxy groups in methyl cellulose and the alkali metal hydroxide concentration of the alkali metal hydroxide solution. Preferably the alkali metal hydroxide solution is used in such an amount as to provide 0.01 to 2.0 parts by weight, more preferably 0.5 to 1.5 parts by weight of alkali metal hydroxide per unit part by weight (i.e., 1.00 part by weight) of pulp.

Pulp is contacted with the alkali metal hydroxide solution in a reactor, for example, an internally stirred tank reactor.

Step (S12) is to feed oxygen to the alkali cellulose to effect depolymerization treatment, obtaining a depolymerized alkali cellulose.

Oxygen may be fed, for example, by passing air through the reactor.

The oxygen feed may be continuously or discontinuously conducted after the addition of alkali metal hydroxide solution in Step (11) is completed. By feeding oxygen at the end of addition of alkali metal hydroxide solution, the alkali metal hydroxide solution is uniformly distributed on the pulp so that depolymerization reaction with oxygen may uniformly take place.

Although the precise mechanism is not well understood, uniform depolymerization reaction with oxygen ensures a minimal variation of molecular weight and a low polydispersity index (Mw/Mn).

The temperature of depolymerization reaction with oxygen is preferably in the range of 30 to 85°C, more preferably 30 to 80°C. By using said temperature of depolymerization reaction, reducing the polydispersity index (Mw/Mn) of methyl cellulose may be ensured.

The time of depolymerization reaction with oxygen is preferably in the range of 10 minutes to 2 hours although the time may be set as appropriate in accordance with the 2 wt% aqueous solution viscosity at 20°C of methyl cellulose and the reaction temperature.

Step (S13) is to conduct etherifying reaction of the depolymerized alkali cellulose with a methylating agent to form a reaction product.

Typical of the methylating agent is methyl chloride. The amount of the methylating agent used is preferably 0.5 to 3.0 parts by weight per 1.0 part by weight of pulp although the amount may be set as appropriate in accordance with the DS of methyl cellulose.

For the etherifying reaction, the temperature is preferably 40 to 100°C, and the time is preferably 1 to 5 hours.

Step (S14) is to wash the reaction product, obtaining washed methyl cellulose.

Water is typically used for washing. The temperature of water is preferably 85 to 100°C. The washed methyl cellulose preferably has a water content of 25 to 95% by weight. By using said water content, easy removal of impurities and easy adjustment of water content in the subsequent step may be ensured. The water content of washed methyl cellulose may be measured by the weight loss on drying test of the Japanese Pharmacopoeia, 18th Edition.

Step (S15) is to dry and grind the washed methyl cellulose, yielding the desired methyl cellulose.

The equipment which can be used in the drying step is not particularly limited as long as the desired water content is reachable. A blowing dryer is exemplary. The equipment which can be used in the grinding step is not particularly limited as long as methyl cellulose can be ground. An impact mill and ball mill are exemplary.

### [Methyl cellulose preparing method 2]

Next, methyl cellulose preparing method 2 is described.

In methyl cellulose preparing method 2, the same steps as in methyl cellulose preparing method 1 are carried out until the step of drying and grinding the washed methyl cellulose (to produce methyl cellulose prior to depolymerization), except that etherifying reaction is conducted after the step of forming alkali cellulose without the depolymerization treatment with oxygen. That is, method 2 includes step (S21) which is similar to step (S11), step (S22) of adding a methylating agent to the alkali cellulose for etherifying reaction, step (S23) which is similar to step (S14), and step (S24) which is similar to step (S15).

The next step (S25) is to subject the methyl cellulose (prior to depolymerization) to depolymerization treatment with an acid to form depolymerized methyl cellulose.

The depolymerization treatment with an acid may be conducted by the standard technique. For example, hydrogen halides such as hydrogen chloride may be used as the acid. The acid may be used in the form of aqueous solution. For example, hydrogen chloride may be used in the form of hydrogen chloride aqueous solution, i.e., hydrochloric acid. The hydrogen chloride aqueous solution preferably has a hydrogen chloride concentration of 1 to 45% by weight.

The amount of acid used is preferably 0.04 to 1 part by weight per 100 parts by weight of the methyl cellulose prior to depolymerization. For the depolymerization treatment with acid, the temperature is preferably 40 to 85°C and the time is preferably 0.1 to 4 hours.

After the depolymerization treatment with acid, the acid may be removed, for example, by vacuum pumping the reactor. If necessary, the acid may be neutralized by adding sodium hydrogencarbonate or the like.

Step (S26) is to subject the depolymerized methyl cellulose to dialysis treatment, yielding the desired methyl cellulose.

The dialysis treatment may be carried out by dissolving the depolymerized methyl cellulose in deionized water to form an aqueous solution, charging a dialyzer tube with the aqueous solution, immersing the charged tube in deionized water, and drying the contents of the tube after immersion, allowing methyl cellulose to precipitate.

The dialyzer tube preferably has a fractional molecular weight of 10,000 to 20,000, more preferably 12,000 to 14,000. The length and diameter of the tube are not particularly limited as long as dialysis is possible.

The immersion time is preferably 30 minutes to 5 days, more preferably 1 to 3 days. The tube is immersed in deionized water the volume of which is preferably at least 50 times greater than the volume of the aqueous solution in the tube.

The drying technique is not particularly limited. For example, drying is conducted by pouring the aqueous solution from the tube to a vat and placing the vat in a blowing dryer. The methyl cellulose precipitate resulting from drying may be further ground. For example, a forced mill may be used for grinding.

In this way, there is obtained a methyl cellulose having a polydispersity index of up to 1.9 and a 2 wt% aqueous solution viscosity at 20°C of 3 to 30 mPa·s.

### <N-methyl-2-pyrrolidone>

N-methyl-2-pyrrolidone (NMP) is a typical organic solvent which is used in the manufacture of positive electrodes of lithium-ion batteries. In the inventive carbon black dispersed composition, NMP is added as a dispersing medium for carbon black.

Although the content of NMP is not particularly limited, the NMP content is preferably 75 to 95% by weight, more preferably 81 to 91% by weight of the carbon black dispersed composition. By using said NMP content, easy manipulation of the carbon black dispersed composition may be ensured. Differently stated, the content of NMP is preferably 75 to 95 parts by weight, more preferably 81 to 91 parts by weight per 100 parts by weight of the overall carbon black dispersed composition (preferably the total of carbon black, methyl cellulose and NMP).

Another solvent of at least one type may be used from the aspect of enhancing the affinity of various components (i.e., components of the carbon black dispersed composition and positive electrode-forming mix paste). Examples of the solvent other than NMP include water, N-ethyl-2-pyrrolidone, N,N-dimethylformamide, N,N-dimethylacetamide, N,N-dimethylpropionamide, N,N-diethylacetamide, and 4-acetylmorpholine. In the practice of the invention, NMP is preferably used alone as the solvent.

### <Other components>

The inventive carbon black dispersed composition may contain other components as long as they are not detrimental to the object of the invention, the dispersibility of the composition, and the performance of an electrode formed therefrom. Suitable other components include surfactants, defoamers, pH regulators, and viscosity regulators.

The method of preparing the carbon black dispersed composition of the invention is not particularly limited as long as the foregoing components are uniformly mixed and carbon black is dispersed. For example, the composition is prepared through the step of dispersing carbon black, methyl cellulose and NMP on a dispersing machine. One exemplary dispersing step includes premixing carbon black and methyl cellulose which are powder materials and dispersing the premix in NMP. Another exemplary dispersing step includes dissolving the dispersant in a solvent, typically NMP and mixing the solution with carbon black.

Examples of the dispersing machine include homogenizers, homo-dispersing mills, planetary mixers, paint conditioners, bead mills, and thin-film cyclonic high-speed mixers.

The dispersing step may be carried out stepwise on a plurality of dispersing machines for the purpose of enhancing the dispersibility of carbon black. In one example, powder materials (e.g., carbon black, dispersant, and hindered phenols) and a dispersing medium (NMP) are uniformly mixed on a homo-dispersing mill or planetary mixer, after which carbon black in microparticulate form is dispersed therein on a bead mill or thin-film cyclonic high-speed mixer.

### [Positive electrode-forming mix paste]

A further embodiment of the invention is a positive electrode-forming mix paste comprising the carbon black dispersed composition defined above, a positive electrode active material, and a binder, which is used in the manufacture of a lithium-ion secondary battery-forming positive electrode.

The positive electrode active material is not particularly limited as long as it is commonly used in positive electrodes of lithium-ion secondary batteries. Included are transition metal oxides containing lithium, and these transition metal oxides in which some of transition metal elements are replaced by different elements. Examples of the transition metal oxide include lithium cobalt oxide, lithium nickel oxide, lithium manganese oxide, ternary (NCM) active materials, and NCA active materials. Unlike the oxide-based active material, it is also possible to use positive electrode active materials of polyanion type in which the transition metal is rendered more ionic by introducing a polyvalent anion such as phosphate ion (PO₃³⁻) or silicate ion (SiO₄⁴⁻). Examples of the polyanion type active material include lithium iron phosphate and lithium iron silicate.

The amount of the positive electrode active material is preferably 35 to 80% by weight, more preferably 40 to 70% by weight of the mix paste. Differently stated, the amount of the positive electrode active material is preferably 35 to 80 parts by weight, more preferably 40 to 70 parts by weight per 100 parts by weight of the mix paste.

If the amount of the positive electrode active material is less than 35% by weight, a battery constructed therefrom may have a low energy density. If the amount of the active material exceeds 80% by weight, the positive electrode-forming mix paste may become too hard to coat the paste to a current collector.

Fluorochemical polymers are preferably used as the binder from the aspect of durability of a positive electrode mix layer. Suitable polymers include polyvinylidene fluoride, polyvinyl fluoride, and tetrafluoroethylene. Also, the polymer used as the binder preferably has a Mw of 200,000 to 1,200,000, more preferably 600,000 to 1,000,000. By using said Mw, improving binding and coatability of the mix paste may be ensured. Notably, the Mw of a polymer as the binder may be measured by any well-known method such as gel permeation chromatography.

The amount of the binder is preferably 0.3 to 10% by weight, more preferably 0.5 to 6% by weight of the mix paste. Differently stated, the amount of the binder is preferably 0.3 to 10 parts by weight, more preferably 0.5 to 6 parts by weight per 100 parts by weight of the mix paste. If the amount of the binder is less than 0.3% by weight, a positive electrode mix layer has so poor strength that the mix layer may separate off or crack. If the amount of the binder exceeds 10% by weight, the electrode may have an increased internal electric resistance.

The positive electrode-forming mix paste may be prepared by mixing the carbon black dispersed composition, positive electrode active material, and binder. A dispersing machine as exemplified above for the method of preparing the carbon black dispersed composition may be used as the mixing machine.

In preparing the positive electrode-forming mix paste, a solvent may be added from the aspect of viscosity adjustment. As the solvent, various solvents including NMP as exemplified above for the carbon black dispersed composition may be used. The amount of the solvent (NMP) (that is, the total amount of NMP in the carbon black dispersed composition and additional NMP) is preferably 10 to 70% by weight, more preferably 20 to 60% by weight of the positive electrode-forming mix paste.

The order of admitting components in the mixing step is not particularly limited. The components may be added all at once. The mixing step may be carried out stagewise by premixing the binder, positive electrode active material and solvent, and adding the carbon black dispersed composition to the premix, and further mixing. It is recommended from the aspect of preventing foreign particles like undissolved clumps from entering the mix paste that the binder is previously dissolved in the solvent to form a solution and then added in solution form.

The positive electrode-forming mix paste is suited for the manufacture of positive electrodes of lithium-ion secondary batteries. Specifically, a lithium-ion secondary battery-forming positive electrode is manufactured by coating the mix paste on a current collector to any desired thickness to form a coating, drying the coating, and processing the dry coating into a positive electrode mix layer.

As the current collector, films or foils of metals or alloys such as iron, stainless steel, copper, aluminum and nickel are used. Aluminum is especially preferred from the aspect of potential stability of the positive electrode. The current collector may have been subjected to surface treatment such as carbon coating for the purpose of reducing the interfacial resistance.

Examples of the applicator for coating the positive electrode-forming mix paste include knife coaters, comma coaters, die coaters, and gravure coaters though are not limited thereto. For improving the electric resistance of the positive electrode and binding of mix layer, the mix paste as coated to the current collector or the dry coating of the mix paste may be rolled on a roll press or the like.

The coating of the mix paste preferably has a thickness of 50 to 1,000 µm, more preferably 100 to 500 µm.

The coating of the mix paste after application is dried in a drying oven. The drying temperature and time are preferably 50 to 180°C and 0.5 to 1,200 minutes, more preferably 60 to 140°C and 1 to 600 minutes.

In this way, there is obtained a lithium-ion secondary battery-forming positive electrode comprising the current collector and the mix layer in the form of a dry film of the mix paste. The positive electrode mix layer preferably has a thickness of 10 to 800 µm, more preferably 30 to 400 µm.

### [Lithium-ion secondary battery]

The lithium-ion secondary battery is defined as comprising a positive electrode bearing the mix layer of the invention, a negative electrode, a separator, and an electrolyte. The separator is interposed between the positive and negative electrodes in closed state and impregnated with the electrolyte.

The negative electrode has a negative electrode mix layer on one or both surfaces of a negative electrode current collector.

Like the positive electrode current collector, the negative electrode current collector is a film or foil of metal or alloy. A copper or nickel foil is preferred from the aspect of potential stability of the negative electrode.

The negative electrode mix layer contains one or more materials capable of occluding and releasing lithium ions and optionally a binder, conductive agent, and dispersant for negative electrodes.

The negative electrode active material is not particularly limited as long as it is commonly used as the negative electrode active material for lithium-ion secondary batteries. Examples include naturally occurring graphite, synthetic graphite, oxide-based negative electrode materials such as lithium titanium oxide, and silicon-based negative electrode materials such as nano-silicon, silicon alloys and silicon monoxide.

The negative electrode binder may be at least one of polymers and synthetic rubbers. Suitable polymers include polyvinylidene fluoride, polyimide, polyamide-imide, aramide, polyacrylic acid, lithium polyacrylate, and sodium carboxymethyl cellulose. Suitable synthetic rubbers include styrene butadiene rubbers, fluororubbers, and ethylene propylene diene rubbers.

The negative electrode conductive agent is at least one carbon material selected from acetylene black, Ketjenblack, graphite, carbon nanotubes, and carbon nano-fibers.

The negative electrode dispersant is at least one member selected from, for example, methyl cellulose, hydroxypropyl methyl cellulose, ethyl cellulose, sodium carboxymethyl cellulose, polyvinyl alcohol, polyvinyl pyrrolidone, and polyurethane.

The separator serves to provide electronic insulation between the positive and negative electrodes, for thereby preventing current short-circuits caused by the contact between the positive and negative electrodes, and to allow for passage of lithium ions when impregnated with an electrolyte. The separator is formed of a porous membrane of synthetic resin or ceramic and may have a multilayer structure having two or more porous films laid one on another. Suitable synthetic resins include polytetrafluoroethylene, polypropylene, and polyethylene. Alumina is typical of the ceramic.

The electrolyte is a material for mediating ion conduction between positive and negative electrodes. The electrolyte is prepared, for example, by dissolving a lithium salt such as lithium hexafluorophosphate in a non-aqueous solvent which is a mixture of ethylene carbonate, dimethyl carbonate, ethyl methyl carbonate and propylene carbonate. Any desired additive may be added to the electrolyte for the purposes of improving stability and safety and reducing electric resistance.

As mentioned above, the carbon black dispersed composition of the invention is improved in the dispersibility of carbon black and storage stability. On use of this carbon black dispersed composition, reductions of rejection rate and production cost during the manufacture of lithium-ion secondary batteries are possible.

### EXAMPLES

Examples of the invention are shown below by way of illustration and not by way of limitation.

Notably, the BET surface area is a specific surface area as measured by the BET method. The viscosity at 20°C of a 2 wt% aqueous solution of methyl cellulose is measured by a Ubbelohde viscometer according to JIS K2283-1993. As used herein, wt% is % by weight and pbw is parts by weight.

The polydispersity index (Mw/Mn) was measured by the following method.

### <Measurement of polydispersity index (Mw/Mn)>

A GPC-MALS system was used for the measurement of molecular weights.

The system is composed of a pump (LC-20AD, Shimadzu Corp.), degasser (DGU-20A3R, Shimadzu Corp.), autosampler (SIL-20A, Shimadzu Corp.), column oven (CTO-20A, Shimadzu Corp.), guard column (SB-G, Shoko Science Co., Ltd.), size exclusion column (OHpakSB-806MHQ, Shoko Science Co., Ltd.), 18 angle light scattering instrument (DAWN M3220, Wyatt Technologies), and differential refractive index instrument (Optilab M1520, Wyatt Technologies).

Prior to measurement, methyl cellulose (MC), prepared as below, was metered into a screw bottle of 50-mL volume. With stirring by a magnetic stirrer, 20 mL of 0.1M sodium nitrate (NaNO₃) buffer was added to MC. MC was dissolved by stirring at room temperature for 1 hour, and completely dissolved by further stirring under ice cooling for 1 hour.

The solution was then allowed to stand at room temperature for 30 minutes until the solution resumed room temperature. The concentration of the solution varies with the viscosity at 20°C of 2 wt% aqueous solution of MC. The solution was prepared to a concentration of 0.30 wt% for a viscosity of 3 mPa·s to less than 6 mPa·s, and 0.20 wt% for a viscosity of 6 mPa·s to 30 mPa s. The thus prepared solution was filtered through a membrane filter having a pore size of 0.45 µm (DIMIC-13CP, Advantec Co., Ltd.). A reference was prepared by adding 2 mL of 0.1M sodium nitrate (NaNO₃) buffer to 5 mg of pullulan (P50, Shoko Science Co., Ltd.), dissolving pullulan, and filtering through a membrane filter having a pore size of 0.20 µm (DIMIC-13CP, Advantec Co., Ltd.).

The molecular weight of the MC solutions and the pullulan solution as the reference was measured using 0.1M sodium nitrate (NaNO₃) buffer as the moving phase, under conditions: flow rate 1.0 mL/min, column temperature 40°C, differential refractive index instrument temperature 25°C, injection volume 200 µL, and measuring time 20 minutes. At the end of measurement, analysis was carried out as follows, using analysis software ASTRA, version 7.3.2. It is noted that MC has a dn/dc value of 0.139 mL/g.

A peak range was selected from the chromatogram of light scattering, and Detector Nos. 5 to 16 of the light scattering instrument were used. The molecular weight was computed by AUTOFitting using the extrapolation method (primary). A polydispersity index (Mw/Mn) was obtained in this way. The polydispersity index measurement data of MC were normalized using the measurement data of pullulan as the reference.

### <Preparation of methyl cellulose>

### [Synthesis Example 1]

### Preparation of MC-1

Wood pulp having an intrinsic viscosity of 370 ml/g was ground on a grinder into powder pulp. Of this powder pulp, a fraction corresponding to a cellulose content of 6.0 kg in solids in pulp was fed to a jacketed, internally stirred, pressure resistant reactor. Vacuum pumping and nitrogen purging were carried out until oxygen was fully removed from the reactor.

With stirring, 13.54 kg of 49 wt% sodium hydroxide aqueous solution was added to the reactor over 20 minutes. While the reactor was kept at an internal temperature of 80°C, air was passed through the reactor at a rate of 10 NL/min for about 38 minutes. At the end of air feed, stirring was continued until the lapse of 40 minutes from the start of air feed. At the end of air feed, vacuum pumping and nitrogen purging were carried out until oxygen was fully removed from the reactor.

After 2.4 kg of dimethyl ether and 10.9 kg of methyl chloride were added to the reactor, reaction was conducted at 60-90°C for 110 minutes. At the end of reaction, the reaction solution was washed with water to a water content of 85 wt%. Using a blowing dryer, it was dried to a water content of 2 wt%. The mass was milled on an impact mill (Victory Mill), obtaining methyl cellulose 1 (MC-1).

MC-1 had a 2 wt% aqueous solution viscosity at 20°C of 15 mPa s, a DS of methoxy groups of 1.8, and a polydispersity index (Mw/Mn) of 1.52.

### [Synthesis Example 2]

### Preparation of MC-2

Wood pulp having an intrinsic viscosity of 700 ml/g was ground on a grinder into powder pulp. Of this powder pulp, a fraction corresponding to a cellulose content of 6.0 kg in solids in pulp was fed to a jacketed, internally stirred, pressure resistant reactor. Vacuum pumping and nitrogen purging were carried out until oxygen was fully removed from the reactor.

With stirring, 13.43 kg of 49 wt% sodium hydroxide aqueous solution was added to the reactor over 20 minutes.

To the reactor, 2.4 kg of dimethyl ether and 10.0 kg of methyl chloride were added. Reaction was conducted at 60-90°C for 110 minutes. At the end of reaction, the reaction solution was washed with water to a water content of 85 wt%. Using a blowing dryer, it was dried to a water content of 2 wt%. The mass was milled on an impact mill (Victory Mill), obtaining powdered methyl cellulose.

Then 10.5 wt% hydrochloric acid was sprayed onto the methyl cellulose powder so as to give 0.15 part by weight of hydrogen chloride per 100 parts by weight of methyl cellulose. The hydrochloric acid-sprayed methyl cellulose was subjected to depolymerization reaction in a rotating glass reactor with a jacket temperature of 80°C for 70 minutes.

With the jacket temperature kept at 80°C, the glass reactor was held under a reduced pressure of 40 mmHg for 30 minutes, allowing hydrogen chloride and water to volatilize off the reactor.

To the methyl cellulose in the reactor, sodium hydrogencarbonate was added in an amount corresponding to 1/2 mole per mole of the hydrogen chloride added to neutralize the methyl cellulose, obtaining methyl cellulose 2 (MC-2).

MC-2 had a 2 wt% aqueous solution viscosity at 20°C of 15 mPa·s, a DS of methoxy groups of 1.8, and a polydispersity index (Mw/Mn) of 2.17.

### [Synthesis Example 3]

### Preparation of MC-3

By following the same procedure as MC-2 except that in the depolymerization reaction, the concentration of hydrochloric acid was 14 wt%, the jacket temperature was 95°C, and the time was 25 minutes, there was obtained methyl cellulose 3 (MC-3).

MC-3 had a 2 wt% aqueous solution viscosity at 20°C of 15 mPa s, a DS of methoxy groups of 1.8, and a polydispersity index (Mw/Mn) of 6.74.

### [Synthesis Example 4]

### Preparation of MC-4

Powdered methyl cellulose was obtained as in Synthesis Example 2 via the step of etherifying reaction of alkali cellulose with a methylating agent, washing step, and drying/milling step.

Then 14 wt% hydrochloric acid was sprayed onto the methyl cellulose powder so as to give 0.30 part by weight of hydrogen chloride per 100 parts by weight of methyl cellulose. The hydrochloric acid-sprayed methyl cellulose was subjected to depolymerization reaction in a rotating glass reactor with a jacket temperature of 80°C for 70 minutes.

With the jacket temperature kept at 80°C, the reactor was held under a reduced pressure of 40 mmHg for 30 minutes, allowing hydrogen chloride and water to volatilize off the reactor.

To the methyl cellulose in the reactor, sodium hydrogencarbonate was added in an amount corresponding to 1/2 mole per mole of the hydrogen chloride to neutralize the methyl cellulose.

The neutralized methyl cellulose was dissolved in deionized water to form a 2 wt% aqueous solution, which was filled into a dialyzer tube (fractionation molecular weight 12,000-14,000 and diameter 28.6 mm). The tube filled with the solution was immersed in deionized water, followed by dialysis treatment for 2 days. After Teflon^{®} sheet was laid in a metal vat, the solution was poured from the tube into the vat. With the vat placed in a dryer, the solution was dried at 100°C for 2 hours, leaving a methyl cellulose film.

The film was cut and milled on a forced mill, obtaining powdered methyl cellulose 4 (MC-4).

MC-4 had a 2 wt% aqueous solution viscosity at 20°C of 4 mPa·s, a DS of methoxy groups of 1.8, and a polydispersity index (Mw/Mn) of 1.71.

### [Synthesis Example 5]

### Preparation of MC-5

By following the procedure of Synthesis Example 4 except that dialysis treatment was omitted after depolymerization reaction with hydrochloric acid and neutralization, methyl cellulose 5 (MC-5) was obtained.

MC-5 had a 2 wt% aqueous solution viscosity at 20°C of 4 mPa s, a DS of methoxy groups of 1.8, and a polydispersity index (Mw/Mn) of 1.99.

### <Test sample>

Various materials used in carbon black dispersed compositions of Examples and Comparative Examples are shown below.

### Carbon black:

| | |
|---|---|
| • Acetylene black: | DENKA BLACK Li-435 (referred to as Li-435, hereinafter, by Denka Co., Ltd., BET surface area 136 m²/g) |
| • Acetylene black: | DENKA BLACK Li-100 (referred to as Li-100, hereinafter, by Denka Co., Ltd., BET surface area 68 m²/g) |
| • Furnace black: | VULCAN XC72 (referred to as VXC72, hereinafter, by Cabot Corp., BET surface area 237 m²/g) |

### Dispersant:

| | |
|---|---|
| • Methyl cellulose 1 (MC-1): | 2 wt% aqueous solution viscosity (20°C) 15 mPa·s, methoxy DS 1.8, polydispersity index (Mw/Mn) 1.52 |

| | |
|---|---|
| • Methyl cellulose 2 (MC-2): | 2 wt% aqueous solution viscosity (20°C) 15 mPa·s, methoxy DS 1.8, Mw/Mn 2.17 |
| • Methyl cellulose 3 (MC-3): | 2 wt% aqueous solution viscosity (20°C) 15 mPa s, methoxy DS 1.8, Mw/Mn 6.74 |
| • Methyl cellulose 4 (MC-4): | 2 wt% aqueous solution viscosity (20°C) 4 mPa·s, methoxy DS 1.8, Mw/Mn 1.71 |
| • Methyl cellulose 5 (MC-5): | 2 wt% aqueous solution viscosity (20°C) 4 mPa·s, methoxy DS 1.8, Mw/Mn 1.99 |

### <Preparation of carbon black dispersed composition>

### [Example 1]

A carbon black dispersed composition for batteries was prepared by the following procedure.

2.6 g of acetylene black (Li-435) as the carbon black and 0.208 g of methyl cellulose 1 (MC-1) as the dispersant both in powder form were mixed (8 parts by weight of MC-1 per 100 parts by weight of carbon black). 12.0 g of NMP was added to the mixture, which was pre-mixed on a debubbling mixer (ARV-310, Thinky Co., Ltd.) at 2,000 rpm for 5 minutes. Thereafter, 3.8 g of NMP was added to the mixer, and mixing was continued for a further 5 minutes. The dispersion was further agitated on a thin-film spin system dispersing mixer (Filmix 30-L by Primix Co., Ltd.) at 12,500 rpm for 1 minute, obtaining a carbon black dispersed composition.

### [Comparative Example 1]

A carbon black dispersed composition was obtained by the same procedure as in Example 1 except that methyl cellulose 2 (MC-2) was used instead of MC-1.

### [Comparative Example 2]

A carbon black dispersed composition was obtained by the same procedure as in Example 1 except that methyl cellulose 3 (MC-3) was used instead of MC-1.

### [Example 2]

2.6 g of acetylene black (Li-435) as the carbon black and 0.286 g of methyl cellulose 4 (MC-4) as the dispersant both in powder form were mixed (11 parts by weight of MC-4 per 100 parts by weight of carbon black). 12.0 g of NMP was added to the mixture, which was pre-mixed on a debubbling mixer (ARV-310, Thinky Co., Ltd.) at 2,000 rpm for 5 minutes. Thereafter, 3.7 g of NMP was added to the mixer, and mixing was continued for a further 5 minutes. The dispersion was further agitated on a thin-film spin system dispersing mixer (Filmix 30-L by Primix Co., Ltd.) at 12,500 rpm for 1 minute, obtaining a carbon black dispersed composition.

### [Comparative Example 3]

A carbon black dispersed composition was obtained by the same procedure as in Example 2 except that methyl cellulose 5 (MC-5) was used instead of MC-4.

### [Example 3]

3.3 g of acetylene black (Li-100) as the carbon black and 0.116 g of methyl cellulose 1 (MC-1) as the dispersant both in powder form were mixed (3.5 parts by weight of MC-1 per 100 parts by weight of carbon black). 11.0 g of NMP was added to the mixture, which was pre-mixed on a debubbling mixer (ARV-310, Thinky Co., Ltd.) at 2,000 rpm for 5 minutes. Thereafter, 3.9 g of NMP was added to the mixer, and mixing was continued for a further 5 minutes. The dispersion was further agitated on a thin-film spin system dispersing mixer (Filmix 30-L, Primix Co., Ltd.) at 12,500 rpm for 1 minute, obtaining a carbon black dispersed composition.

### [Comparative Example 4]

A carbon black dispersed composition was obtained by the same procedure as in Example 3 except that methyl cellulose 2 (MC-2) was used instead of MC-1.

### [Comparative Example 5]

A carbon black dispersed composition was obtained by the same procedure as in Example 3 except that methyl cellulose 3 (MC-3) was used instead of MC-1.

### [Example 4]

2.5 g of furnace black (VXC72) as the carbon black and 0.325 g of methyl cellulose 1 (MC-1) as the dispersant both in powder form were mixed (13 parts by weight of MC-1 per 100 parts by weight of carbon black). 10.0 g of NMP was added to the mixture, which was pre-mixed on a debubbling mixer (ARV-310, Thinky Co., Ltd.) at 2,000 rpm for 5 minutes. Thereafter, 6.4 g of NMP was added to the mixer, and mixing was continued for a further 5 minutes. The dispersion was further agitated on a thin-film spin system dispersing mixer (Filmix 30-L, Primix Co., Ltd.) at 12,500 rpm for 1 minute, obtaining a carbon black dispersed composition.

### [Comparative Example 6]

A carbon black dispersed composition was obtained by the same procedure as in Example 4 except that methyl cellulose 3 (MC-3) was used instead of MC-1.

### <Evaluation method>

The carbon black dispersed compositions thus obtained were evaluated for dispersibility by a rotational rheometer. Specifically, using a rotational rheometer (MCR702, Anton Paar GmbH) and a cone plate as the measurement jig, a shear viscosity was measured at a set temperature of 20°C and a shear rate of 10 m/s. A lower shear viscosity indicates better dispersibility of carbon black. Herein, carbon black was judged to have satisfactory dispersibility when the initial viscosity was 600 mPa·s or less. The sample was rated "unmeasurable (×)" when the hardness of the slurry caused overloading or the viscosity behavior could not be normally measured when the carbon black dispersed composition was sandwiched between cone plates for shear viscosity measurement.

The storage stability of the carbon black dispersed composition was evaluated by measuring the shear viscosity of the composition after static storage at 35°C for 1 week, and calculating a change of the shear viscosity after storage from the initial shear viscosity (immediately after dispersion). A smaller viscosity change indicates that the dispersion has better storage stability. Herein the composition is rated to have satisfactory storage stability when the change of the shear viscosity after storage from the initial shear viscosity is within ±20%.

The results are shown in Table 1.

**Table 1**

| | Carbon black | | MC | | | Content (wt%) | | | MC amount*⁴ (pbw) | Test results (slurry viscosity) | | |
|---|---|---|---|---|---|---|---|---|---|---|---|---|
| | Cabon used | Surface area (m²/g) | Designation | Viscosity*³ (mPa·s) | Mw/Mn | Carbon black | MC | NMP | | Initial (mPa·s) | After 1 week storage (mPa·s) | Change (%) |
| Ex. 1 | Li-435 | 136 | MC-1 | 15 | 1.52 | 14.0 | 1.1 | 84.9 | 8 | 277 | 303 | 9 |
| Comp. Ex. 1 | Li-435 | 136 | MC-2 | 15 | 2.17 | 14.0 | 1.1 | 84.9 | 8 | 1,237 | 465 | -62 |
| Comp. Ex. 2 | Li-435 | 136 | MC-3 | 15 | 6.74 | 14.0 | 1.1 | 84.9 | 8 | 4,909 | 2,768 | -44 |
| Ex. 2 | Li-435 | 136 | MC-4 | 4 | 1.71 | 14.0 | 1.5 | 84.5 | 11 | 565 | 554 | -2 |
| Comp. Ex. 3 | Li-435 | 136 | MC-5 | 4 | 1.99 | 14.0 | 1.5 | 84.5 | 11 | 713 | 829 | 16 |
| Ex. 3 | Li-100 | 68 | MC-1 | 15 | 1.52 | 18.0 | 0.6 | 81.4 | 3.5 | 169 | 164 | -3 |
| Comp. Ex. 4 | Li-100 | 68 | MC-2 | 15 | 2.17 | 18.0 | 0.6 | 81.4 | 3.5 | 665 | 190 | -71 |
| Comp. Ex. 5 | Li-100 | 68 | MC-3 | 15 | 6.74 | 18.0 | 0.6 | 81.4 | 3.5 | × | - | - |
| Ex. 4 | VXC72 | 237 | MC-1 | 15 | 1.52 | 13.0 | 1.7 | 85.3 | 13 | 363 | 377 | 4 |
| Comp. Ex. 6 | VXC72 | 237 | MC-3 | 15 | 6.74 | 13.0 | 1.7 | 85.3 | 13 | 1,367 | 1,778 | 30 |

| | | | | | | | | | | | | |
|---|---|---|---|---|---|---|---|---|---|---|---|---|
| *1: "×" indicates unmeasurable *2: MC designates methyl cellulose *3: 2 wt% aqueous solution viscosity at 20°C *4: Amount of MC per 100 pbw of carbon black | | | | | | | | | | | | |

As seen from Example 1, the carbon black dispersed composition using methyl cellulose having a polydispersity index of up to 1.9 as the dispersant is improved in carbon black dispersibility and storage stability over Comparative Examples 1 and 2 using methyl cellulose having a polydispersity index in excess of 1.9.

As seen from the results of Examples 2 to 4 and Comparative Examples 3 to 6, the carbon black dispersed compositions using methyl cellulose having a polydispersity index of up to 1.9 as the dispersant is improved in carbon black dispersibility and storage stability.

### <Preparation of positive electrode-forming mix paste>

Positive electrode-forming mix pastes were prepared by the following procedure using the carbon black dispersed compositions of Examples 1 to 4.

A mixing vessel was charged with 7.1 g of the carbon black dispersed composition of Example 1 and 14.3 g of a NMP solution (concentration 7 wt%) of polyvinylidene fluoride (Mw 630,000), which were kneaded on a debubbling mixer (ARV-310, Thinky Co., Ltd.) at 2,000 rpm for 2 minutes. To the premix were added 48.0 g of ternary positive electrode active material (NCM622) and 7.6 g of NMP. The mixture was kneaded on the debubbling mixer at 2,000 rpm for 3 minutes, obtaining a positive electrode-forming mix paste having a solid concentration of 65 wt%.

By the same procedure as above, positive electrode-forming mix pastes were prepared from the carbon black dispersed compositions of Examples 2 to 4. All the positive electrode-forming mix pastes could be uniformly dispersed and effectively coated.

### <Preparation of lithium-ion secondary battery-forming positive electrode>

Positive electrodes for lithium-ion secondary batteries were prepared by the following procedure using the positive electrode-forming mix pastes.

Using an electrode coater/dryer (LiB-W140, Clean Technology Inc.), the positive electrode-forming mix paste was coated and dried on a current collector in the form of an aluminum foil of 20 µm thick and 14 mm wide. The coating/drying conditions included coating thickness 180 µm, transporting speed 0.2 m/min, drying furnace length 50 cm, and drying furnace interior temperature 115-125°C.

Thereafter, using a table-top roll press (SA-602, Tester Industry Co., Ltd.), the dry coating film resulting from the coating/drying step was rolled together with the current collector under a linear pressure of 200 kg/cm, obtaining a positive electrode for lithium-ion secondary batteries. From any of the positive electrode-forming mix pastes, a positive electrode for lithium-ion secondary batteries could be normally prepared.

While the invention has been illustrated and described in typical embodiments, it is not intended to be limited to the details shown. Various other embodiments, additions, and modifications may occur to persons skilled in the art. All such embodiments fall within the spirit and scope of the invention as long as the effects and benefits of the invention are achieved.

## Claims

1. A carbon black dispersed composition for batteries comprising carbon black, methyl cellulose, and N-methyl-2-pyrrolidone, wherein
the methyl cellulose has a polydispersity index of up to 1.9 based on absolute molecular weight measurement by size exclusion chromatography (SEC) coupled with multi-angle light scattering (MALS) and a 2 wt% aqueous solution viscosity of 3 to 30 mPa s at 20°C.

2. The carbon black dispersed composition of claim 1 wherein the content of carbon black is 5 to 20% by weight of the composition.

3. The carbon black dispersed composition of claim 1 wherein the carbon black has a BET specific surface area of 30 to 1,500 m²/g.

4. The carbon black dispersed composition of claim 1 wherein 1 to 20 parts by weight of methyl cellulose is present per 100 parts by weight of carbon black.

5. A positive electrode-forming mix paste comprising the carbon black dispersed composition of any one of claims 1 to 4, a positive electrode active material, and a binder.

6. A lithium-ion secondary battery-forming positive electrode comprising a current collector and a positive electrode mix layer which is formed on the collector by coating and drying the mix paste of claim 5 thereto.

7. A lithium-ion secondary battery comprising the positive electrode of claim 6, a negative electrode, an electrolyte, and a separator.
